(19) Europäisches Patentamt
European Patent Office
Office européen des brevets

(11) EP 1 873 759 A2

(12) **EUROPEAN PATENT APPLICATION**

(43) Date of publication:
**02.01.2008 Bulletin 2008/01**

(51) Int Cl.:
**_G11B 5/48_** _(2006.01)_

(21) Application number: **07111148.8**

(22) Date of filing: **27.06.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | (72) Inventors:<br>• **Choi, Ho-joong**<br>  **Gyeonggi-do (KR)**<br>• **Ku, Young-min**<br>  **Gyeonggi-do (KR)** |
| (30) Priority: **28.06.2006  KR 20060058880** | (74) Representative: **Grünecker, Kinkeldey,**<br>**Stockmair & Schwanhäusser**<br>**Anwaltssozietät**<br>**Maximilianstrasse 58**<br>**80538 München (DE)** |
| (71) Applicant: **Samsung Electronics Co., Ltd.**<br>**Suwon-si, Gyeonggi-Do (KR)** | |

(54) **Suspension capable of reducing loss of high frequency signal**

(57)     A suspension including a supporting layer, a conductive layer, and a dielectric layer. The conductive layer is formed as a plurality of traces. The supporting layer is formed of a rigid material to support the conductive layer. The dielectric layer is formed between the supporting layer and the conductive layer and is formed of a dielectric material with a permittivity of 1.1 to 2.8 F/m. Thus, a loss of a high frequency signal during the transmission of electrical signals can be prevented and the writing/reading performance of a hard disk drive apparatus can be improved.

## FIG. 3

CONDUCTIVE LAYER (COOPER)
(310)

DIELECTRIC LAYER (DUROID) — 320

SUPPORTING LAYER (STAINLESS STEEL) — 330

EP 1 873 759 A2

**Description**

The present general inventive concept relates to a magnetic disk drive apparatus, and more particularly, to a suspension included in a magnetic disk drive apparatus.

Conventionally, a magnetic hard disk drive apparatus (HDD) includes a head disk assembly (HDA) formed of fixed units and a printed circuit board (PCB) formed of circuit components. A HDD is widely used as an auxiliary storage unit of a computer system, which magnetically reads/writes data from/on a rotating magnetic disk and can access bulk data at a high speed.

Data is stored in concentrical tracks formed on a magnetic disk by recording magnetic patterns on the tracks in the HDD. Data is read by detecting a change in magnetization generated by the magnetic patterns recorded on the tracks. The change in magnetization of the tracks is detected by a magnetic head which converts an electric signal into a magnetic signal or a magnetic signal into an electric signal to record and read data. The magnetic head is conventionally attached on a surface of a slider.

In order to transmit the electrical signals to/from the magnetic head, a current path is required, and the current path is called a trace. The trace is usually formed of a conductive layer and is disposed at an upper end of a suspension. An assembly including a suspension and a slider, on which a magnetic head is mounted, is referred to as a head gimbal assembly (HGA) and an assembly including the HGA and an actuator is referred to as a head stack assembly (HSA).

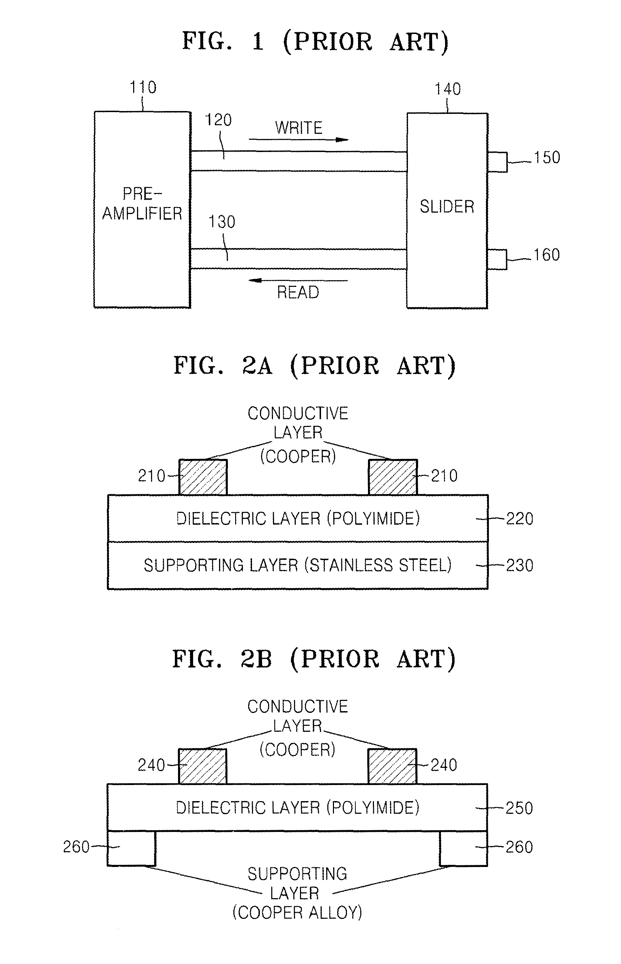

FIG. 1 is a schematic view of a conventional suspension.

Referring to FIG. 1, the electric signal, which is transmitted to a preamplifier 110, is transmitted via a first trace 120 to a slider 140, and the electric signal, which is transmitted to the slider 140, is converted into a magnetic signal by a recording head 150 in order to be recorded on a disk (not illustrated). Also, the magnetic signal read from the disk by a reading head 160 is converted into an electric signal in order to be transmitted to the slider 140, and the electric signal, which is transmitted to the slider 140, is transmitted to the preamplifier 110 via a second trace 130.

However, as a track per inch (TPI) and a bit per inch (BPI) increase, the frequency of the electrical signals used to record/read data on/from a disk also increases. Thus, in order to transmit high frequency signals at high speed, a fast rising time and a fast falling time for signals needs to be secured. Accordingly, the function of the first trace 120 and the second trace 130, which transmit electrical signals, becomes very important.

FIG. 2A is a cross-sectional view of a conventional suspension and FIG. 2B is a cross-sectional view of another conventional suspension.

Referring to FIG. 2A, the conventional suspension includes a conductive layer 210 formed of highly conductive copper, a supporting layer 230 formed of stainless steel with a low conductivity, and a dielectric layer 220 disposed between the conductive layer 210 and the supporting layer 230 and formed of polyamide with a permittivity of about 3.5 farads/meter (F/m). The conductive layer 210 functions as a trace through which signals are transmitted.

However, when electrical signals are transmitted through the conductive layer 210 in a first direction, a return current flows in the opposite direction to the first direction through the supporting layer 230. However, since the supporting layer 230 is formed of a material with a low conductivity and a high resistance in order to protect the conductive layer from external shock, some of the return current flowing through the supporting layer 230 is lost.

If there is a loss in the return current flowing through the supporting layer 230, the rising time or falling time of the electrical signals decreases, and thus, it becomes difficult to realize a high-speed operation. Such a phenomenon occurs more when the supporting layer 230 is formed of a material that is highly resistive. However, since the main function of the supporting layer 230 is to protect the conductive layer from external shock, a material having a low resistance cannot be used for the supporting layer 230.

To solve the above problem, as illustrated in FIG. 2B, in another conventional suspension, a supporting layer 260 is formed as a non-supported structure by forming an opening portion in the center of the supporting layer 260 so that no return current is generated in the supporting layer 260 or the supporting layer 260 is formed of a copper alloy, which has a relatively high conductivity and low resistance. However, this is still not sufficient to remove factors that cause loss of high frequency signals.

It is the object of the present invention to provide a suspension that can secure a fast rising time of electrical signals transmitted through a trace by minimizing factors that cause a loss of high frequency signal when electrical signals are transmitted through the trace.

This object is solved by the subject matter of the independent claims.

Preferred embodiments are defined in the dependent claims.

Additional aspects and utilities of the present general inventive concept will be set forth in part in the description which follows.

The foregoing object and/or other aspects and utilities of the general inventive concept may be achieved by providing a conductive layer formed as one or more traces, a supporting layer to support the conductive layer and a dielectric layer formed between the supporting layer and the conductive layer and formed of a dielectric material with a permittivity in a range of substantially 1.1 to 2.8 farads/meter (F/m).

The dielectric material may be Duroid, or Air-Foam. The supporting layer may be formed of a rigid material such as stainless steel, titanium, or beryllium copper, and the conductive layer may be formed of pure copper or a copper alloy.

The thickness of the supporting layer may be 10 to 50 $\mu$m. A plurality of openings may be formed in the center of the supporting layer. The interval between the traces may be 0.1 mm to 15 mm. The suspension according to the present general inventive concept may be applied to one of a floppy disk drive apparatus, an optical disk drive apparatus, a compact disk drive apparatus, and a hard disk drive apparatus.

The foregoing and/or other aspects and utilities of the general inventive concept may also be achieved by providing a disk drive apparatus, including a head unit, a conductive layer formed as one or more traces to conduct the one or more electrical signals between the head unit and a signal source, a supporting layer to support the conductive layer and a dielectric layer formed between the supporting layer and the conductive layer and formed of a dielectric material with a permittivity in a range of substantially 1.1 to 2.8 farads/meter (F/m).

The foregoing and/or other aspects and utilities of the general inventive concept may also be achieved by providing a head gimbal assembly (HGA), including a head slider unit; a conductive layer formed as one or more traces to conduct the one or more electrical signals between the head slider unit and a signal source, a supporting layer to support the conductive layer and a dielectric layer formed between the supporting layer and the conductive layer and formed of a dielectric material with a permittivity in a range of substantially 1.1 to 2.8 farads/meter (F/m).

The foregoing and/or other aspects and utilities of the general inventive concept may also be achieved by providing a head stack assembly (HSA), including an actuator unit and a head gimbal assembly (HGA) coupled to the actuator unit, the HGA including a head slider unit, a conductive layer formed as one or more traces to conduct one or more electrical signals between the head slider unit and a signal source, a supporting layer to support the conductive layer and a dielectric layer formed between the supporting layer and the conductive layer and formed of a dielectric material with a permittivity in a range of substantially 1.1 to 2.8 farads/meter (F/m).

The foregoing and/or other aspects and utilities of the general inventive concept may also be achieved by providing suspension to support a reading/recording head, including a conductive layer formed of one or more traces, a supporting layer to support the conductive layer; and a dielectric layer formed between the supporting layer and the conductive layer, the dielectric layer having a permittivity $\varepsilon_r$ according to the following equation: $C = \varepsilon_o \times \varepsilon_r \times A/h$, wherein C is a capacity that varies according to permittivity $\varepsilon_r$, A is a surface area, h is a height and $\varepsilon_o$ is the permittivity of free space.

These and/or other aspects and utilities of the present general inventive concept will become apparent and more readily appreciated from the following description of the embodiments, taken in conjunction with the accompanying drawings of which:

FIG. 1 is a schematic view of a conventional suspension;

FIG. 2A illustrates another conventional suspension, and FIG. 2B illustrates another conventional suspension;

FIG. 3 is a cross-sectional view illustrating a suspension according to an embodiment of the present general inventive concept;

FIG. 4 is a perspective view illustrating a suspension according to another embodiment of the present general inventive concept;

FIG. 5A is a graph illustrating a loss of high frequency signals in a frequency domain according to an embodiment of the present general inventive concept, and FIG. 5B is a graph illustrating a loss of high frequency signal in a time domain according to an embodiment of the present general inventive concept; and

FIG. 6A is a graph illustrating a simulation of loss of high frequency signals in a frequency domain according to an embodiment of the present general inventive concept, and FIG. 6B is a graph illustrating a simulation of loss of high frequency signals in a time domain according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

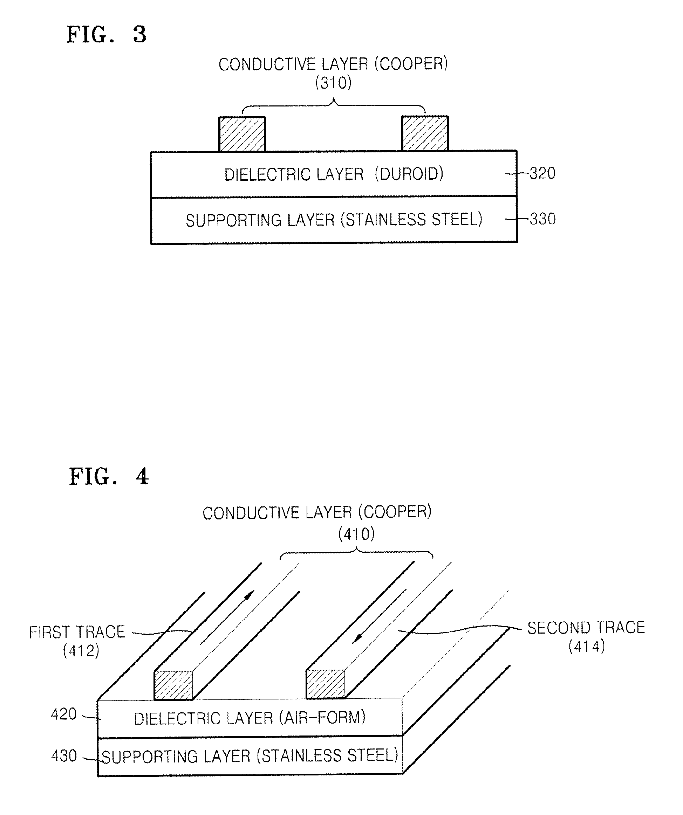

FIG. 3 is a cross-sectional view illustrating a suspension according to an embodiment of the present general inventive concept.

Referring to FIG. 3, the suspension includes a conductive layer 310 formed of copper which is highly conductive, a supporting layer 330 formed of stainless steel, which has a low conductivity, and a dielectric layer 320 disposed between the conductive layer 310 and the supporting layer 330, and formed of Duroid with a permittivity of about 2.8 farads/meter (F/m). The conductive layer 310 functions as a trace through which electrical signals are transmitted.

In an embodiment of the present general inventive concept, the supporting layer 330 may be formed of a rigid material such as titanium or beryllium copper, rather than stainless steel. A plurality of openings may be formed in the center of the supporting layer 330. The openings are provided to minimize the formation of a return current, which is generated in the supporting layer 330 and may be formed in the shape of a rectangle or square.

The conductive layer 310 is formed as a plurality of traces, which may be separate by a predetermined distance from one another and arranged symmetrical to one another.

FIG. 3 illustrates two traces; however, the number of the traces may vary, for example, according to the number of magnetic disks.

The dielectric layer 320 is disposed between the supporting layer 330 and the conductive layer 310. The dielectric layer 320 according to the current embodiment of the present general inventive concept may be formed of a dielectric material called Duroid. The Duroid has low permittivity, and reduces capacitive coupling generated between the conductive layer 310 and the supporting layer 330.

The dielectric material of the dielectric layer 320 may have a permittivity of 1.1 to 2.8 F/m. The dielectric layer 320 is formed of a dielectric material having the low permittivity as described above and can be further understood from the analysis of the Equation 1 below.

【Equation 1】

$$C = \varepsilon_0 * \varepsilon_r * \frac{A}{h}$$

Referring to Equation 1 above, a capacity C varies according to specific permittivity $\varepsilon_r$, surface area A, height h and the permittivity of free space $\varepsilon_o$. However, a reduction in the surface area A or the height h is limited. Thus, in the current embodiment of the present general inventive concept, the specific permittivity $\varepsilon_r$ is reduced as compared to the conventional art in order to minimize the capacitive coupling generated between the conductive layer 310 and the supporting layer 330. As a result, the loss of the return current can be reduced despite using the supporting layer 330, which has a high resistance.

The material forming the dielectric layer 320 according to the current embodiment of the present general inventive concept has a permittivity of 1.1 to 2.8 F/m. Examples of such material forming the dielectric layer 320 are Duroid, and Air-Form.

Duroid has a permittivity of about 2.8 F/m, and air form has a permittivity of about 1.1 F/m. Also, other dielectric materials with a permittivity from 1.1 to 2.8 F/m may also be used.

If the dielectric layer 320 is formed of a dielectric material with a permittivity of 3.0 F/m or less, the capacitive coupling generated between the conductive layer 310 and the supporting layer 330 when electrical signals are transmitted through the conductive layer 310 can be reduced as compared to the conventional art, and thus, a loss of the return current flowing through the supporting layer 330 can be reduced.

Accordingly, a loss of a high frequency signal generated by the return current flowing through the supporting layer 330, which has a low conductivity, can be reduced, and thus, a fast rising time of electrical signals transmitted to a magnetic head through the suspension can be secured.

FIG. 4 is a perspective view illustrating a suspension according to another embodiment of the present general inventive concept.

Referring to FIG. 4, the suspension includes a supporting layer 430 at the bottom of the suspension and a dielectric layer 420 formed on the supporting layer 430, wherein the supporting layer 430 and the dielectric layer 420 are formed parallel to each other. The supporting layer 430 and the dielectric layer 420 may be combined using a coating agent. A plurality of first and second traces 412 and 414 in the shape of a long strip are arranged on the dielectric layer 420 at a predetermined interval from each other.

The first and second traces 412 and 414 are formed of a highly conductive material so that electrical signals can be continuously transmitted through the first and second traces 412 and 414. As described above, the first and second traces 412 and 414 may be formed of a copper alloy, rather than pure copper. The copper alloy refers to an alloy containing 80% copper or more.

The first and second traces 412 and 414 are arranged symmetrically with respect to one another. Thus, electrical signals are transmitted via the first trace 412 from a preamplifier (not illustrated) to a magnetic head (not illustrated), and reversibly, from the magnetic head via the second trace 414 to the preamplifier. The electrical signals transmitted through the first trace 412 and the second trace 414 have the same frequency, amplitude, and opposite phases.

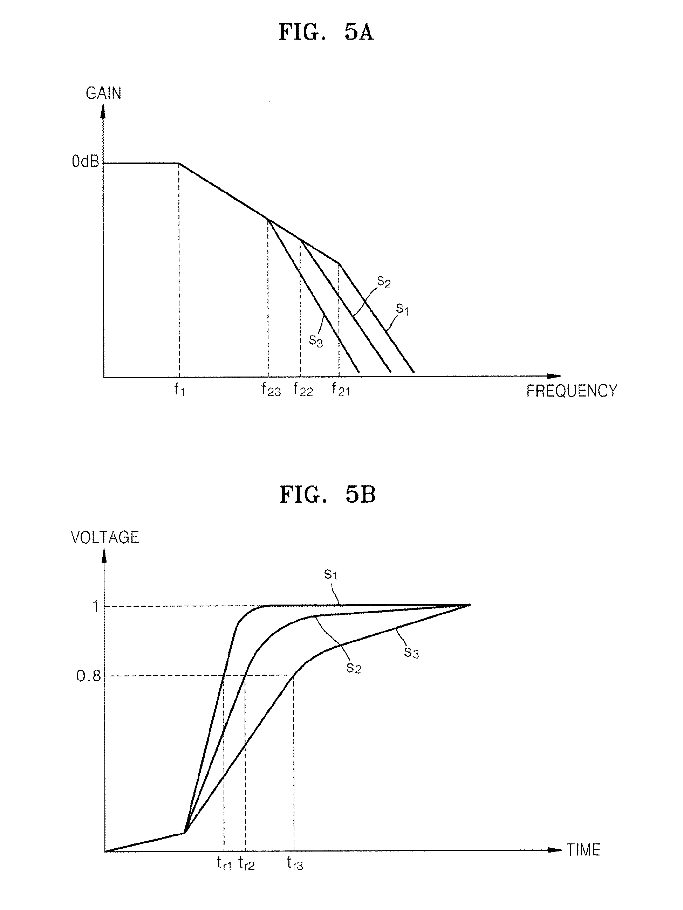

FIG. 5A is a graph illustrating a loss of high frequency signals in a frequency domain according to an embodiment of the present general inventive concept, and FIG. 5B is a graph illustrating a loss of a high frequency signal in a time domain according to an embodiment of the present general inventive concept.

S1 denotes signals output from the preamplifier, and S2 denotes signals transmitted to a magnetic head through a suspension having a dielectric layer formed of a material with a low permittivity, and S3 denotes signals transmitted to a magnetic head through a suspension having a dielectric layer formed of a material with high permittivity. In addition, $f_1$, $f_{21}$, $f_{22}$, and $f_{23}$ denote corner frequencies, and $f_{21}$, $f_{22}$, and $f_{23}$ can be represented by the following equations.

【Equation 2】

$$f_{21}, f_{22}, f_{23} = \frac{1}{\pi t_r}$$

A first corner frequency $f_1$ has a predetermined value according to the transmission speed, however, $f_{21}$, $f_{22}$, and $f_{23}$ vary according to the rising time $t_r$. In particular, referring to FIG. 5B, the rising times of S3 and S2 differ from the rising time of S1 by □1 = $t_{r3}$ - $t_{r1}$ and □2= $t_{r2}$ - $t_{r1}$, respectively. Such difference is due to the difference between the permittivity and becomes greater as the frequency band increases.

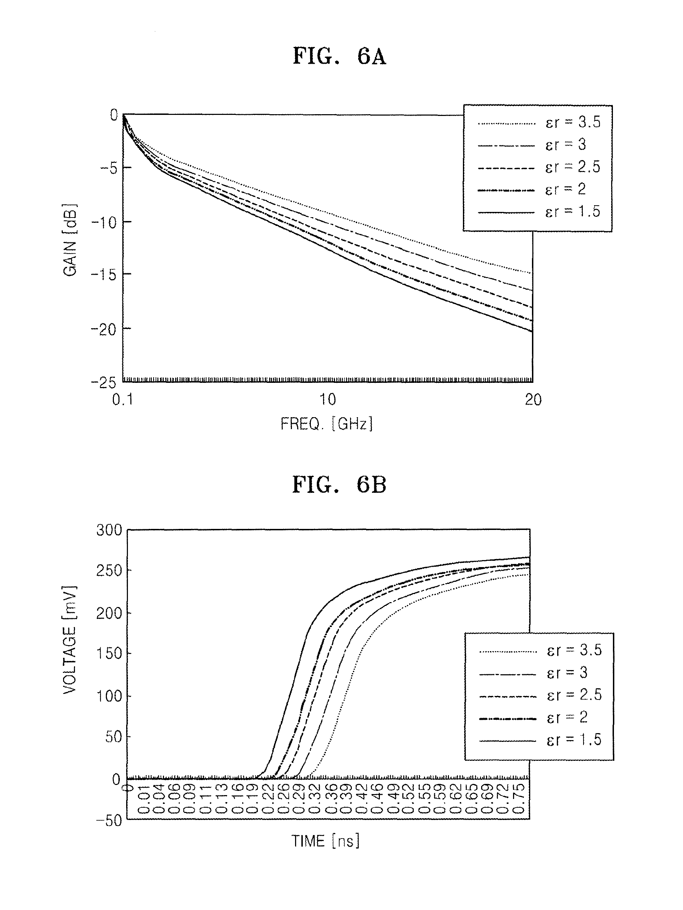

FIG. 6A is a graph illustrating a simulation of loss of high frequency signals in a frequency domain according to an embodiment of the present general inventive concept, and FIG. 6B is a graph illustrating a simulation of loss of high frequency signals in a time domain according to an embodiment of the present general inventive concept. In the present simulation, the permittivity of the dielectric layer of the suspension varied as 2.0, 2.5, 3.0, and 3.5 F/m, to compare the loss of output signals through the suspension according to the frequency.

Referring to FIG. 6A, the gain in terms of decibels of an electric signal at a frequency of about 1 GHz is -2.62 dB at a permittivity of 1.5 F/m, -2.86 dB at a permittivity of 2.0 F/m, -3.06 dB at a permittivity of 2.5 F/m, and -3.27 dB at a permittivity of 3.0 F/m. Such a difference in the gain in terms of decibels according to the permittivity increases as the frequencies increase due to the skip depth effect which is a phenomenon of a current being focused onto a surface of a conductor.

Also, variations of the gain in terms of decibels of an electric signal at a frequency of about 10 GHz is -9.23 dB at a permittivity of 1.5 F/m, -10.20 dB at a permittivity of 2.0 F/m, -11.07 dB at a permittivity of 2.5, -11.94 dB at a permittivity of 3.0, and -12.58 dB at a permittivity of 3.5 F/m. That is, the lower the permittivity, the smaller the loss of a high frequency signal.

The above loss of gain that varies according to the permittivity can be represented as illustrated in Table 1 below.

[Table 1]

| Permittivity (F/m) vs frequency | $\varepsilon_r = 1.5$ | $\varepsilon_r = 2.0$ | $\varepsilon_r = 2.5$ | $\varepsilon_r = 3.0$ | $\varepsilon_r = 3.5$ |
|---|---|---|---|---|---|
| 0.1 GHz | -0.42 | -0.47 | -0.50 | -0.54 | -0.59 |
| 1.0 GHz | -2.62 | -2.86 | -3.06 | -3.27 | -3.48 |
| 2.0 GHz | -3.90 | -4.32 | -4.67 | -5.01 | -5.32 |
| 5.0 GHz | -5.97 | -6.58 | -7.13 | -7.68 | -8.13 |
| 10.0 GHz | -9.23 | -10.20 | -11.07 | -11.94 | -12.58 |
| 15.0 GHz | -12.24 | -13.54 | -14.71 | -15.88 | -16.88 |
| 20.0 GHz | -14.85 | -16.43 | -17.86 | -19.30 | -20.24 |

Referring to FIG. 6B, the time required to reach 80 % of a peak voltage (assumed to be about 25 mV, here), was 0.33 ns at a permittivity of 1.5 F/m, 0.38 ns at a permittivity of 2.0 F/m, 0.40 ns at a permittivity of 2.5 F/m, 0.45 ns at a permittivity of 3.0 F/m, and 0.49 ns at a permittivity of 3.5 F/m.

In addition, the peak voltage was 275 mV at a permittivity of 1.5 F/m, 273 mV at a permittivity of 2.0 F/m, 272 mV at a permittivity of 2.5 F/m, 260 mV at a permittivity of 3.0 F/m, and 258 mV at a permittivity of 3.5 F/m. Such result indicates that not only an AC component decreases; however, also a DC component decreases according to the permittivity of the dielectric layer forming the suspension.

The rising time functions as a reference determine whether a high-speed operation of a hard disk drive apparatus is possible. Accordingly, the shorter the rising time, the more likely the high speed operation is possible. Accordingly, when a dielectric material, having the permittivity according to the present general inventive concept, is used in a suspension, a loss of a high frequency signal can be highly reduced, and a fast rising time can be obtained that is very advantageous for high speed operations.

The above amplitude of voltage that varies according to the permittivity can be represented as illustrated in Table 2 below.

[Table 2]

| Permittivity (F/m) vs time | $\varepsilon_r = 1.5$ | $\varepsilon_r = 2.0$ | $\varepsilon_r = 2.5$ | $\varepsilon_r = 3.0$ | $\varepsilon_r = 3.5$ |
|---|---|---|---|---|---|
| 0.25ns | 66.49 | 17.90 | 3.37 | 0.32 | 0.11 |
| 0.30ns | 172.61 | 102.78 | 66.06 | 22.90 | 2.47 |
| 0.35ns | 212.75 | 181.51 | 153.64 | 95.21 | 44.64 |
| 0.40ns | 229.38 | 210.50 | 200.92 | 173.74 | 129.83 |
| 0.45ns | 239.12 | 224.35 | 217.86 | 200.30 | 181.08 |
| 0.50ns | 246.77 | 234.97 | 229.97 | 216.32 | 203.23 |
| 0.55ns | 252.07 | 241.58 | 238.59 | 226.81 | 215.91 |
| 0.60ns | 256.56 | 247.00 | 246.15 | 235.75 | 226.19 |
| 0.65ns | 260.01 | 251.07 | 250.16 | 242.98 | 234.20 |
| 0.70ns | 262.50 | 254.01 | 254.60 | 248.69 | 240.25 |

As described above, according to various embodiments of the present general inventive concept, the suspension can reduce coupling generated between the conductive layer and the dielectric layer by the variation of the permittivity of the dielectric material without requiring additional processes or without a decrease in the implemental performance as compared to the conventional suspension. Thus, a loss of a high frequency signal due to a reduction in the return current when performing high frequency operations can be prevented, and thus, a fast rising time of signals can be obtained. Accordingly, the writing/reading capacity of the magnetic hard disk drive apparatus can be improved.

Although a few embodiments of the present general inventive concept have been illustrated and described, it will be appreciated by those skilled in the art that changes may be made in these embodiments without departing from the general inventive concept, the scope of which is defined in the appended claims.

**Claims**

1.   A suspension to support a reading/recording head, comprising:

   a conductive layer formed as one or more traces;
   a supporting layer to support the conductive layer; and
   a dielectric layer formed between the supporting layer and the conductive layer and formed of a dielectric material with a permittivity in a range of substantially 1.1 to 2.8 farads/meter.

2.   The suspension of claim 1, wherein the dielectric material is Duroid.

3.   The suspension of claim 1, wherein the dielectric material is Air-Form.

4.   The suspension of one of claims 1 to 3, wherein the supporting layer is formed of a rigid material having a low conductivity.

5.   The suspension of claim 4, wherein the rigid material is stainless steel.

6.   The suspension of one of claims 1 to 5, wherein a plurality of openings are formed in a center of the supporting layer.

7.   The suspension of one of claims 1 to 6, wherein the conductive layer is formed of pure copper or a copper alloy.

8.   A disk drive apparatus, comprising:

   a head unit;

a conductive layer formed as one or more traces to conduct one or more electrical signals between the head unit and a signal source;
a supporting layer to support the conductive layer; and
a dielectric layer formed between the supporting layer and the conductive layer and formed of a dielectric material with a permittivity in a range of substantially 1.1 to 2.8 farads/meter.

9. The apparatus of claim 8, wherein the signal source is a preamplifier.

10. The apparatus of claim 8, wherein the one or more electrical signals are conducted between the head unit and the signal source through a head slider unit.

11. The apparatus of claim 8, wherein the supporting layer comprises a rigid material.

12. The apparatus of claim 8, wherein the dielectric material comprises at least one of Duroid and Air-Form.

13. A head gimbal assembly, comprising:

a head slider unit;
a conductive layer formed as one or more traces to conduct one or more electrical signals between the head slider unit and a signal source;
a supporting layer to support the conductive layer; and
a dielectric layer formed between the supporting layer and the conductive layer and formed of a dielectric material with a permittivity in a range of substantially 1.1 to 2.8 farads/meter.

14. A head stack assembly, comprising:

an actuator unit; and
a head gimbal assembly according to claim 13, wherein said head gimbal assembly is coupled to the actuator unit.

# FIG. 1 (PRIOR ART)

110

120

WRITE →

140

PRE-
AMPLIFIER

SLIDER

150

130

160

← READ

# FIG. 2A (PRIOR ART)

CONDUCTIVE
LAYER
(COOPER)

210

210

DIELECTRIC LAYER (POLYIMIDE) — 220

SUPPORTING LAYER (STAINLESS STEEL) — 230

# FIG. 2B (PRIOR ART)

CONDUCTIVE
LAYER
(COOPER)

240

240

DIELECTRIC LAYER (POLYIMIDE) — 250

260 —

— 260

SUPPORTING
LAYER
(COOPER ALLOY)

## FIG. 3

CONDUCTIVE LAYER (COOPER)
(310)

DIELECTRIC LAYER (DUROID) —320

SUPPORTING LAYER (STAINLESS STEEL) —330

## FIG. 4

CONDUCTIVE LAYER (COOPER)
(410)

FIRST TRACE (412)

SECOND TRACE (414)

420 — DIELECTRIC LAYER (AIR-FORM)

430 — SUPPORTING LAYER (STAINLESS STEEL)

# FIG. 5A

# FIG. 5B

## FIG. 6A

## FIG. 6B